# EUROPEAN PATENT APPLICATION

(11) **EP 3 788 868 A1**
(43) Date of publication of application: **10.03.2021**
(21) Application number: 20194053.3
(22) Date of filing: 02.09.2020
(51) Int. Cl.: A01G 7/04, F21Y 105/12, F21Y 105/18, F21Y 113/13, F21Y 115/10

(54) **LUMINAIRE**

(30) Priority: 05.09.2019 US 201962896110 P
(71) Applicant: Electronic Theatre Controls, Inc., Middleton, WI 53562-0979 (US)
(72) Inventor: Bennette, Adam, London, E8 2PL (GB)
(74) Representative: Forresters IP LLP

(57) **Abstract**

A light source including a first plurality of light emitters arranged in a first pattern (195) about an axis. The first plurality of light emitters includes a first light emitter (185, e.g. LED 1), a second light emitter (185, e.g. LED 8) positioned opposite the first light emitter, a third light emitter (185, e.g. LED 2), and a fourth light emitter (185, e.g. LED 9) positioned opposite the third light emitter. The light source further includes a second plurality of light emitters arranged about the axis in a second pattern (200) that is within the first pattern (195). The first light emitter (e.g. LED 1) and the second light emitter (e.g. LED 8) emit light of a first color, and the third light emitter (e.g. LED 2) and the fourth light emitter (e.g. LED 9) emit light of a second color.

## Description

### CROSS-REFERENCE TO RELATED APPLICATIONS

This application claims priority to co-pending U.S. Provisional Patent Application No. 62/896,110 filed on September 5, 2019, the entire contents of which is hereby incorporated herein by reference.

### TECHNICAL FIELD OF INVENTION

Embodiments described herein relate to luminaires or light fixtures including light emitters with different colors.

### SUMMARY

Luminaires having multiple individual light emitters, such as light emitting diodes, with different colors can suffer from a light beam having patches of different colors. Although the light from the different color LEDs is mixed, an asymmetrical projection results in a light beam with undesirable patches of different colors. One reason for this result is that when light emitters with different colors are used in a luminaire, each individual light source is displaced a different distance from an optical center of the luminaire and from the optical center of the other light emitters of the luminaire. The following disclosure provides a luminaire having a layout of colored light emitters with a light beam having a homogeneous color and the color etendue (i.e., the color spread) is minimized.

The invention provides, in one aspect, a light source including a first plurality of light emitters arranged in a first pattern about an axis. The first plurality of light emitters includes a first light emitter, a second light emitter positioned opposite the first light emitter, a third light emitter, and a fourth light emitter positioned opposite the third light emitter. The light source further includes a second plurality of light emitters arranged about the axis in a second pattern that is within the first pattern. The first light emitter and the second light emitter emit light of a first color, and the third light emitter and the fourth light emitter emit light of a second color.

The invention provides, in another aspect, a light fixture including a first array with light emitters arranged in a first pattern about a first axis and in a second pattern about the first axis. The light fixture also includes a second array with light emitters arranged in the first pattern about a second axis and in the second pattern about the second axis. The second axis is positioned a distance away from the first axis. The light fixture further includes a third array with light emitters arranged in the first pattern about a third axis and in the second pattern about the third axis. The third axis is positioned the distance away from the first axis. The light fixture further includes a fourth array with light emitters arranged in the first pattern about a fourth axis and in the second pattern about the fourth axis. The fourth axis is positioned the distance away from the second axis and the distance away from the third axis.

Before any embodiments are explained in detail, it is to be understood that the embodiments are not limited in its application to the details of the configuration and arrangement of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

### BRIEF DESCRIPTION OF THE DRAWINGS

FIG. 1 illustrates a lighting system according to one embodiment of the invention.
FIG. 2 illustrates a luminaire of the lighting system of FIG. 1.
FIG. 3 is a schematic illustration of an array of light emitters of the luminaire of FIG. 2.
FIG. 4 is an enlarged view of a portion of FIG. 3.
FIG. 5 is a schematic illustration of an array of light emitters according to one embodiment of the invention.
FIG. 6 is a schematic illustration of an array of light emitters according to one embodiment of the invention.

### DETAILED DESCRIPTION

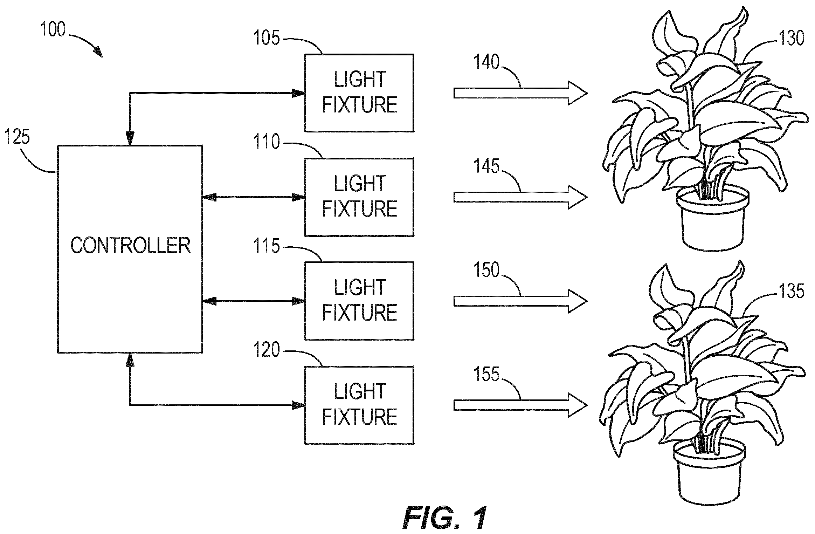

FIG. 1 illustrates a lighting system 100 that includes four light fixtures or luminaires 105, 110, 115, and 120 in the illustrated embodiment. Each of the fixtures 105, 110, 115, and 120 is connected to a controller 125 in a wired or wireless manner for receiving control signals that control respective light outputs 140, 145, 150, and 155 of the fixtures 105, 110, 115, and 120 that are used to illuminate plants 130, 135 in the illustrated application. In other embodiments, each light fixture 105-120 includes its own internal controller for controlling the respective light outputs 140, 145, 150, and 155.

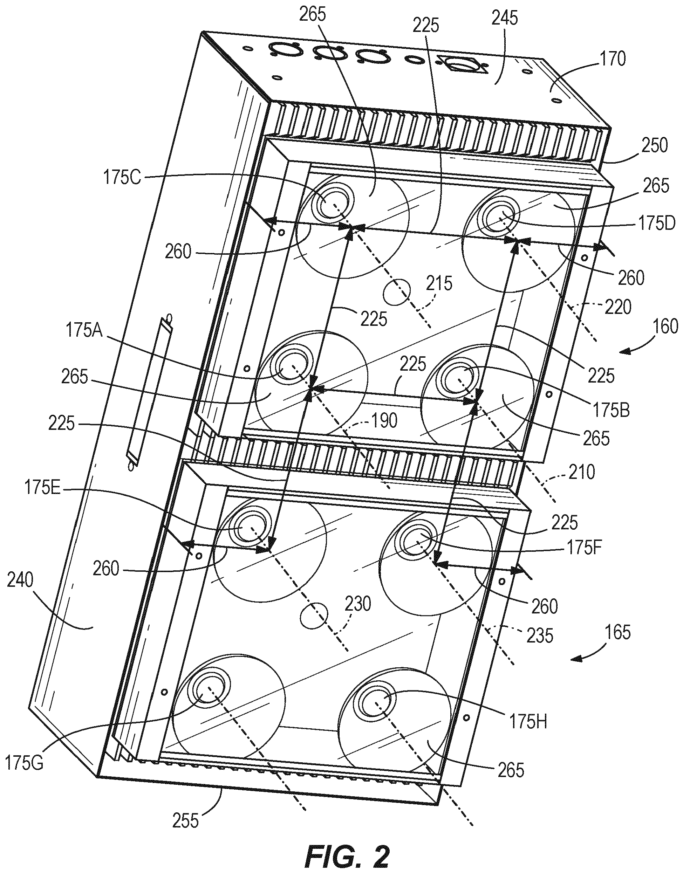

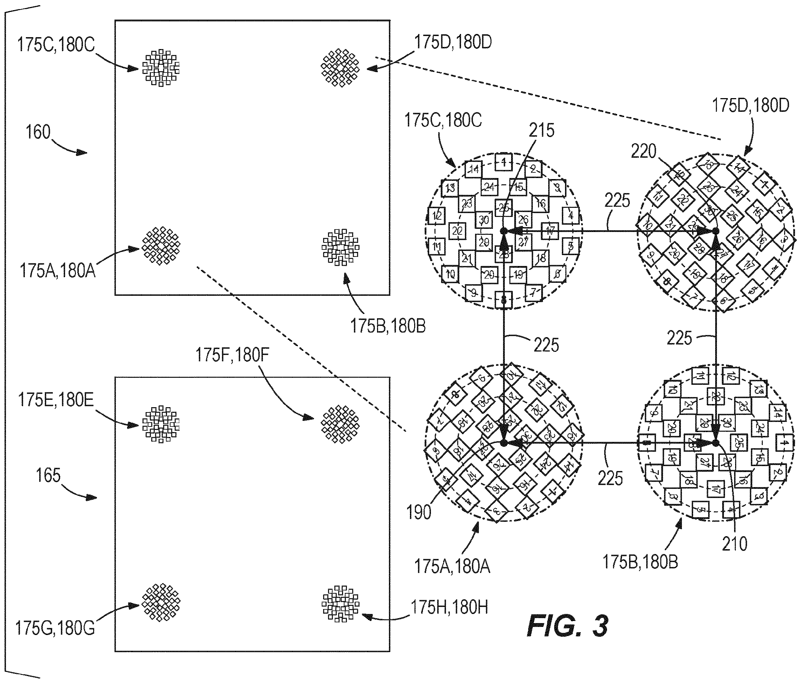

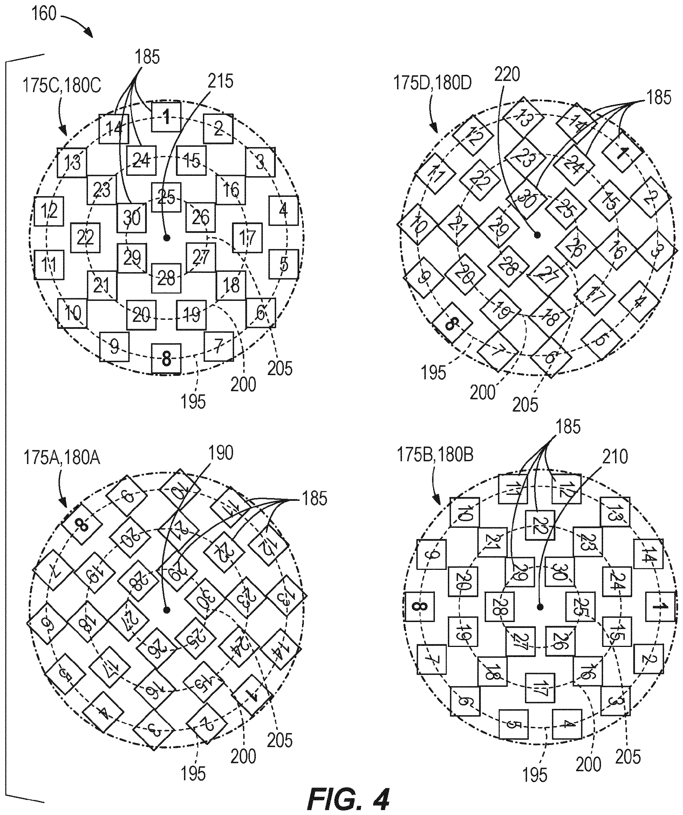

FIG. 2 illustrates one of the light fixtures 105. The light fixture 105 includes a first section 160 and a second section 165 positioned within a housing 170. Each section 160, 165 includes four light sources 175A, 175B, 175C, and 175D. With reference to FIG. 3, each light source 175A-175D includes an array 180A, 180B, 180C, 180D of individual light emitters 185. In one embodiment, the individual light emitters 185 are light emitting diodes (LEDs). With reference to FIG. 4, the numbers 1 - 30 represent the individual LEDs 185 in each array 180A-180D. In other words, each of the illustrated arrays 180A-180D include 30 LEDs 185.

With continued reference to FIG. 2, the first array 180A of light emitters 185 is arranged about a first axis 190. Specifically, the first array 180A includes light emitters 185 arranged in a first pattern 195 about the first axis 190, a second pattern 200 about the first axis 190, and a third pattern 205 about the first axis 195. In the illustrated embodiment, the second pattern 200 is positioned within the first pattern 195, and the third pattern 205 is positioned within both the first pattern 195 and the second pattern 205. In the illustrated embodiment, with reference to FIG. 3, the first pattern 195, the second pattern 200, and the third pattern 205 are circular-shaped. In some embodiments, the first pattern 195, the second pattern 200, and the third pattern 205 are concentric circles. Patterns of other shapes (e.g., triangular or any other suitable polygon) are also consider.

With continued reference to FIG. 3, the second array 180B of light emitters 185 is arranged about a second axis 210, the third array 180C of light emitters 185 is arranged about a third axis 215, and the fourth array 180D of light emitters 185 is arranged about a fourth axis 220. In other words, each of the light sources 175A-175D are aligned with one of the axes 190, 210, 215, 220. More specifically, the second array 180B includes light emitters 185 arranged in the first pattern 195 about the second axis 210 (e.g., LEDs 1-14), light emitters 185 arranged in the second pattern 200 about the second axis 210 (e.g., LEDs 15-24), and light emitters 185 arranged in the third pattern 205 about the second axis 210 (e.g., LEDs 25-30). Likewise, the third array 180C includes light emitters 185 arranged in the first pattern 195 about the third axis 215 (e.g., LEDs 1-14), light emitters 185 arranged in the second pattern 200 about the third axis 215 (e.g., LEDs 15-24), and light emitters 185 arranged in the third pattern 205 about the third axis 215 (e.g., LEDS 25-30). Also, the fourth array 180D includes light emitters 185 arranged in the first pattern 195 about the fourth axis 220 (e.g., LEDs 1-14), light emitters 185 arranged in the second pattern 200 about the fourth axis 220 (e.g., LEDs 15-24), and light emitters 185 arranged in the third pattern 205 about the fourth axis 220 (e.g., LEDs 25-30).

With reference to FIG. 2, the light sources 174A-175D of each section 160, 165 are arranged so that a center-to-center distance 225 between adjacent light sources 175A-175D is the same. In other words, the second axis 210 is positioned the distance 225 away from the first axis 190, the third axis 215 is positioned the distance 225 away from the first axis 190, and the fourth axis 220 is positioned the distance 225 away from the second axis 210 and the distance 225 away from the third axis 215. The same center-to-center distance 225 is also maintained between light sources 175A-175D of the different sections 160, 165. In other words, the second section 165 is positioned adjacent the first section 160 and the second section 165 includes light sources 175E-175H with arrays 180E-180H of light emitters 185 similar to those described above with respect to the first section 160. Specifically, the second section 165 includes a fifth array 180E with light emitters 185 arranged in the first pattern 195 about a fifth axis 230 and in the second pattern 200 about the fifth axis 230. The fifth axis 230 is positioned the distance 225 away from the first axis 190. Likewise, a sixth axis 135 of a sixth array 180F is positioned the distance 225 away from the second axis 210.

With continued reference to FIG. 2, if another light fixture 105 (e.g., light fixture 110, 115, or 120 from FIG. 1) was located adjacent any side 240, 245, 250, 255 of the illustrated light fixture 105, the same center-to-center distance 225 would be maintained between light sources 175. In other words, a distance 260 between each of the axes 180, 210, 215, 220, 230, 235 and the closest side 240, 245, 250, 255 of the housing 170 is approximately one half the center-to-center distance 225. In the illustrated embodiment, the first axis 190, the third axis 215 and the fifth axis 230 are positioned the distance 260 away from the side 240. In the illustrated embodiment, projection optics 265 (e.g., a diffuser) are coupled to a frame 270 positioned within the housing 170 so that the light from the light sources 175A-175D pass through the projection optics 265.

Referring to FIG. 4, each array 180A-180D includes an outer ring as the first pattern 195, a middle ring as the second pattern 200, and an inner ring as the third pattern 205. In the illustrated embodiment, the ring patterns 195, 200, 205 are concentric and aligned with the optical axis 190, 210, 215, 220 of the array 180A-180D. In the illustrated embodiment, the inner ring pattern 206 includes 6 LEDs (e.g., LEDs 25-30), the middle ring pattern 200 includes 10 LEDs (e.g., LEDs 15-24), and the outer ring pattern 195 includes 14 LEDs (e.g., LEDs 1-14). In other embodiments, the arrays 180A-180D may include more or fewer than three ring patterns with more or fewer light emitters on each ring.

With continued reference to FIG. 4, each one of the LEDs 1-30 is electrically connected with a rotationally opposite (e.g., about 180 degrees) partner LED in the same ring pattern. For example, in outer ring pattern 195 LED 1 is paired with LED 8 that is positioned rotational opposite LED 1 in the outer ring pattern 195. In other words, a first light emitter 185 (e.g., LED 1) is positioned opposite a second light emitter 185 (e.g., LED 8), and likewise, a third light emitter 185 (e.g., LED 2) is positioned opposite a fourth light emitter 185 (e.g., LED 9). As such, rotational symmetry the array 180A occurs at about 180 degrees. The first light emitter 185 (e.g., LED 1) and the second light emitter 185 (e.g., LED 8) emit light of a first color and the third light emitter 185 (e.g., LED 3) and the fourth light emitter 185 (e.g., LED 9) emit a light of a second color. LED 1 and LED 8 are controlled and operate together as a single source of light. In other words, the first light emitter 185 (e.g., LED 1) and the second light emitter 185 (e.g., LED 8) are controlled to be energized at the same time. Likewise, LED 2 and LED 9 are controlled and operated together as a single source of light. In the illustrated embodiment, the outer ring pattern 195 includes the following LEDs 185 that are electrically connected and paired: LEDs 1 and 8; LEDs 2 and 9; LEDs 3 and 10; LEDs 4 and 11; LEDs 5 and 12; LEDs 6 and 13; and LEDs 7 and 14. The LEDs 185 in the middle ring pattern 200 and the inner ring pattern 205 are similarly paired and electrically connected. Accordingly, in the illustrated embodiment, each ring pattern 195, 200, 205 includes an even number of light emitters or LEDs.

In other embodiments, the light emitters are coupled together in other multiples besides two (e.g., in triplets and not pairs), in which case the angle of rotational symmetry is not 180 degrees. In other words, the rotational symmetry of the array of light emitters is 360 degrees divided by the number of light emitters electrically coupled together (e.g., 360 degrees/ 3 light emitters = rotational symmetry of 120 degrees). As such, the array of light emitters may include five light emitters coupled together and arranged symmetrically about 72 degrees apart (e.g., 360 degrees/ 5 light emitters = rotational symmetry of 72 degrees). In the embodiments with an odd number of LEDs (e.g., 3 or 5) coupled together in the pattern, the pattern includes an odd number of total light emitters.

In the illustrated embodiment, the LEDs 185 (e.g., LED 1-30) are colored LEDs. The LEDs that are paired (e.g., LED 1 and 8; LED 2 and 9, etc.) have the same color. For example, in one embodiment, LED 1 and LED 8 are red, LED 2 and LED 9 are red-orange, LED 3 and LED 10 are amber, LED 4 and LED 11 are green, LED 5 and LED 12 are cyan, LED 6 and LED 13 are blue, and LED 7 and LED 14 are indigo. In some embodiments, the LEDs 185 are infrared or ultraviolet. For example, the middle ring pattern 200 and the inner ring pattern 205 can include the infrared LEDs and the ultraviolet LEDs.

With continued reference to FIG. 4, each section 160, 164 includes the four arrays 180A-180D having the same layout and color of LEDs 185 with the paired electrical connection described above. Each array 180A-180D is rotated relative to the adjacent array 180A-180D. In the illustrated embodiment, the second array 180B is rotated about 45 degrees about the optical axis 210 relative to first array 180A. That is, LED 1 of the second array 180B is rotated about the axis 210 of the array 180B about 45 degrees (i.e., within a range of about 40 degrees to about 50 degrees) from the position of LED 1 of the first array 180A. Likewise, LED 1 of the third array 180C is rotated about the axis 215 of the third array 180C about 45 degrees from the position of LED 1 of second array 180B (i.e., about 90 degrees from the position of LED 1 of the first array 180A). In other words, the light emitter 185 pair (e.g., LED 1 and 8) in the first array 180A are in a first orientation relative to the axis 190; and the same light emitter 185 pair (e.g., LED 1 and 8) in the second array 180B are in a second orientation relative to the axis 210. In the illustrated embodiment, the second orientation of the second array 180A is rotated approximately 45 degrees (i.e., within a range of about 40 degrees to about 50 degrees) relative to the first orientation of the first array 180A. In other embodiments, the second orientation of the second array 180B is rotated by an angle greater than 45 degrees or by an angle less than 45 degrees. The angle of rotation of arrays depends on the number of total light emitters and the number of light emitters that are coupled together (e.g., pairs, triplets, etc.)

As a result, a first color (e.g., red from LEDs 1 and 8) is emitted from the first array 180A at a first location relative to the axis 190, and the first color (e.g., red from LEDs 1 and 8) is emitted from the second array 180B at a second location relative to the axis 210. The location of LEDS 1 and 8 in the second array 180B is rotated about 45 degrees about the axis 210 from where the location of the LEDS 1 and 8 in the first array 180A are positioned relative to the axis 190. Likewise, the first color (e.g., red from LEDs 1 and 8) is emitted from the third array 180C at a third location relative to the axis 215. The third location is rotated about 45 degrees about the axis 215 from where the second location of the second array 180B is positioned relative to the axis 210. A second color (e.g. red-orange from LEDs 2 and 9) is emitted from the first array at a location relative to the first axis 190 and the second color is also emitted from the second array 180B at a location relative to the axis 210 that is rotated about 45 degrees about the axis 210 from the location of the first array 180A relative to the axis 190.

In the illustrated embodiment, the light fixture 105 includes two sections 160, 165 with each section 160, 165 having four light sources 175A-175D and 175E-175H and the light fixture is set in a 2 x 4 grid (i.e., two light sources 175 wide by four light sources 175 long). In other embodiments, other suitable grid layout of light sources may be utilized. For example, the light fixture may include any suitable number of light sources 175 in the x direction (e.g., width) and any suitable number of light sources 175 in the y direction (e.g., length). The 2 x 4 example discussed above is just one example. Also, in other embodiments with a different number of light sources, the arrays of LEDs may be rotated at different amounts relative to adjacent arrays than the amounts discussed above.

In another example, the light fixture may include only a single row of light sources 175 (i.e., a 1 x n layout where 'n' is the number of light sources, which could be any number). In this example, the light fixture may include a 1 x 8 layout or eight light sources 175 arranged in a single row. In the 1 x n layout, the light sources may be rotated relative to each other about their optical axis any suitable amount (e.g., 45 degrees, 60 degrees, or a different amount). In other words, the position of light emitters are such that for each luminaire a light source is rotated relative to the other light sources by an equal among with the sum of rotations equally about 360 degrees.

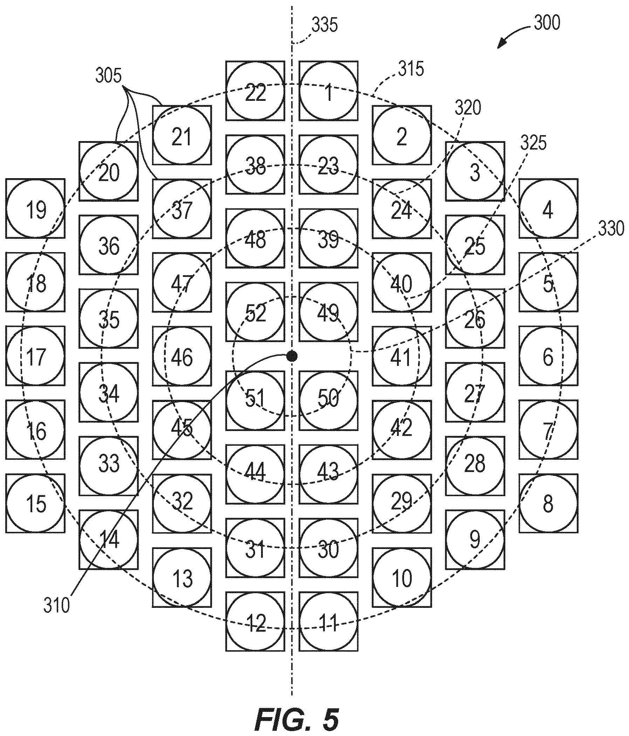

With reference to FIG. 5, an array 300 of light emitters 305 (i.e., LEDs 1-52) according to another embodiment are arranged about an axis 310 in patterns of four concentric rings 315, 320, 325, 330. Similar to the pairing described above, rotationally opposite light emitters are coupled together to provide a single source of light of a certain color. For example, LED 1 is rotationally opposite, electrically coupled to, and emits the same light as LED 12. Likewise, LED 50 is rotationally opposite, electrically coupled to, and emits the same light as LED 52. In other words, the array 300 is symmetrical about a plane 335 that passes through the axis 310.

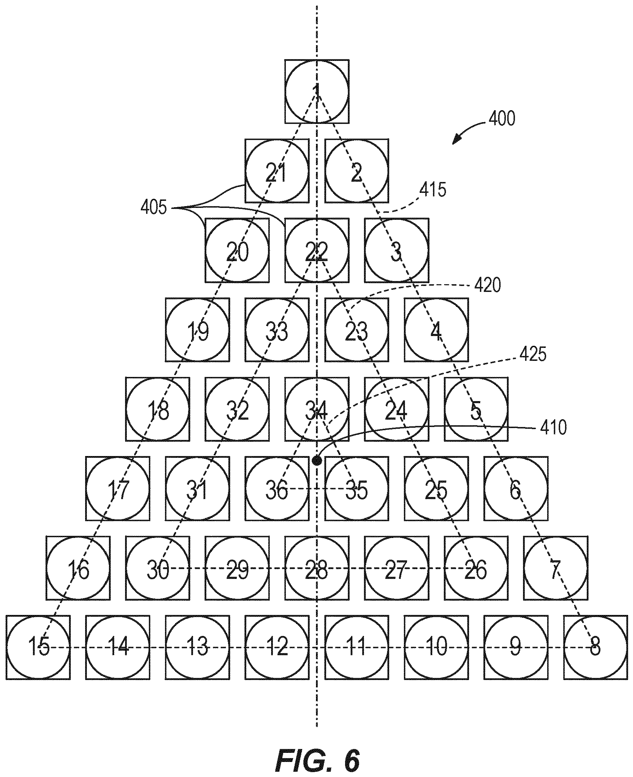

With reference to FIG. 6, an array 400 of light emitters 405 (i.e., LEDs 1-36) according to another embodiment are arranged about an axis 410 in patterns 415, 420, 425 of three concentric triangles. In other words, the array 400 includes LEDs arranged in patterns 415, 420, 425 that are triangular-shaped. Rotationally opposite triplets of light emitters are coupled together to provide a single source of light of a certain color. For example, LED 1 and LED 8 are rotationally opposite (e.g., by about 120 degrees), electrically coupled to, and emit the same light as LED 15. Likewise, LED 2 and 9 are rotationally opposite (e.g., by about 120 degrees), electrically coupled to, and emit the same light as LED 16. In such an embodiment with four light arrays positioned similar to layout shown in FIG. 2, adjacent arrays 400 would be rotated about 30 degrees (e.g., rotational symmetry of 120 degrees/ 4 arrays = 30 degrees of rotation between adjacent arrays. In yet other embodiments, the LED arrays may be rotated at different amounts relative to adjacent arrays.

In some embodiments, the patterns in the array of LEDs are concentric polygons with similar colored light emitters are paired with their opposite at 180 degrees about a center of the polygon. Each of the polygon patterns may be concentric with the other patterns in the array. In some embodiments, the concentric polygon patterns do not have the same number of sides, while still providing an arrangement of opposite pairs of light emitters. In other words, in some embodiments, the patterns in the array of light emitters may be a mix of circles and polygons.

The configuration of the arrays described above provides a luminaire with a light output improved for horticulture applications, for example. That is, the luminaire 105 has a low color etendue that provides an even field of illumination with colored patching and fringing minimized or eliminated. The luminaire 105 has a layout of colored light emitters 185 with a resulting light beam with a homogeneous color and minimized color etendue. Also, the low color etendue from the luminaire 105 enables the use of interchangeable diffuser or projection optics (e.g., 265) in the luminaire 105 that would otherwise not be suitable for use.

### PREFERRED FEATURES OF THE INVENTION

1. A light source comprising:
   a first plurality of light emitters arranged in a first pattern about an axis, the first plurality of light emitters includes a first light emitter, a second light emitter positioned opposite the first light emitter, a third light emitter, and a fourth light emitter positioned opposite the third light emitter; and
   a second plurality of light emitters arranged about the axis in a second pattern that is within the first pattern;
   wherein the first light emitter and the second light emitter emit light of a first color, and the third light emitter and the fourth light emitter emit light of a second color.
2. The light source of clause 1, wherein the first pattern and the second pattern are triangular-shaped.
3. The light source of clause 1, wherein the first pattern and the second pattern are circular-shaped.
4. The light source of clause 3, wherein the first circular-shaped pattern is concentric with the second circular-shaped pattern.
5. The light source of clause 1, wherein the first light emitter and the second light emitter are controlled to be energized at the same time.
6. The light source of clause 1, wherein the first plurality of light emitters and the second plurality of light emitters are light emitting diodes.
7. The light source of clause 1, wherein the first plurality of light emitters and the second plurality of light emitters define a first array wherein the axis is a first axis; and
   wherein the light source further includes a second array defining a second axis positioned a distance away from the axis of the first array.
8. The light source of clause 7, wherein the second array includes a third plurality of light emitters arranged in the first pattern about the second axis, with a fifth light emitter and a sixth light emitter positioned opposite the fifth light emitter.
9. The light source of clause 8, wherein the fifth light emitter and the sixth light emitter emit light of the first color.
10. The light source of clause 9, wherein the first light emitter and the second light emitter are in a first orientation relative to the first axis, and wherein the fifth light emitter and the sixth light emitter are in a second orientation relative to the second axis.
11. The light source of clause 10, wherein the second orientation is rotated 45 degrees relative to the first orientation.
12. A light fixture comprising:
   a first array with light emitters arranged in a first pattern about a first axis and in a second pattern about the first axis;
   a second array with light emitters arranged in the first pattern about a second axis and in the second pattern about the second axis, the second axis is positioned a distance away from the first axis;
   a third array with light emitters arranged in the first pattern about a third axis and in the second pattern about the third axis, the third axis is positioned the distance away from the first axis;
   a fourth array with light emitters arranged in the first pattern about a fourth axis and in the second pattern about the fourth axis; the fourth axis is positioned the distance away from the second axis and the distance away from the third axis.
13. The light fixture of clause 12, wherein a first color is emitted from the first array at a first location relative to the first axis, and the first color is emitted from the second array at a second location relative to the second axis.
14. The light fixture of clause 13, wherein the second location is rotated 45 degrees about the second axis from where the first location is positioned relative to the first axis.
15. The light fixture of clause 14, wherein the first color is emitted from the third array at a third location relative to the third axis, the third location is rotated 45 degrees about the third axis from where the second location is positioned relative to the second axis.
16. The light fixture of clause 14, wherein a second color is emitted from the first array at a third location relative to the first axis, and the second color is emitted from the second array at a fourth location relative to the second axis; wherein the fourth location is rotated 45 degrees about the second axis from where the third location is positioned relative to the first axis.
17. The light fixture of clause 12, wherein a first section includes the first array, the second array, the third array, and the fourth array,
   and wherein the light fixture further includes a second section positioned adjacent the first section, the second section includes a fifth array with light emitters arranged in the first pattern about a fifth axis and in the second pattern about the fifth axis, the fifth axis is positioned the distance away from the first axis.
18. The light fixture of clause 17, wherein the first section and the second section are contained within a housing, and wherein the first axis is positioned a second distance away from the housing, the second distance is equal to one half the first distance.
19. The light fixture of clause 18, wherein the fifth axis is positioned the second distance away from the housing.
20. The light fixture of clause 12, wherein the light emitters are light emitting diodes.

## Claims

1. A light source comprising:
a first plurality of light emitters arranged in a first pattern about an axis, the first plurality of light emitters includes a first light emitter, a second light emitter positioned opposite the first light emitter, a third light emitter, and a fourth light emitter positioned opposite the third light emitter; and
a second plurality of light emitters arranged about the axis in a second pattern that is within the first pattern;
wherein the first light emitter and the second light emitter emit light of a first color, and the third light emitter and the fourth light emitter emit light of a second color.

2. The light source of claim 1, wherein the first pattern and the second pattern are triangular-shaped.

3. The light source of claim 1, wherein the first pattern and the second pattern are circular-shaped, and preferably wherein the first circular-shaped pattern is concentric with the second circular-shaped pattern.

4. The light source of claim 1, wherein the first light emitter and the second light emitter are controlled to be energized at the same time.

5. The light source of claim 1, wherein the first plurality of light emitters and the second plurality of light emitters are light emitting diodes.

6. The light source of claim 1, wherein the first plurality of light emitters and the second plurality of light emitters define a first array wherein the axis is a first axis; and
wherein the light source further includes a second array defining a second axis positioned a distance away from the axis of the first array.

7. The light source of claim 6, wherein the second array includes a third plurality of light emitters arranged in the first pattern about the second axis, with a fifth light emitter and a sixth light emitter positioned opposite the fifth light emitter.

8. The light source of claim 7, wherein the fifth light emitter and the sixth light emitter emit light of the first color, preferably wherein the first light emitter and the second light emitter are in a first orientation relative to the first axis, and wherein the fifth light emitter and the sixth light emitter are in a second orientation relative to the second axis, and more preferably wherein the second orientation is rotated 45 degrees relative to the first orientation.

9. A light fixture comprising:
a first array with light emitters arranged in a first pattern about a first axis and in a second pattern about the first axis;
a second array with light emitters arranged in the first pattern about a second axis and in the second pattern about the second axis, the second axis is positioned a distance away from the first axis;
a third array with light emitters arranged in the first pattern about a third axis and in the second pattern about the third axis, the third axis is positioned the distance away from the first axis;
a fourth array with light emitters arranged in the first pattern about a fourth axis and in the second pattern about the fourth axis; the fourth axis is positioned the distance away from the second axis and the distance away from the third axis.

10. The light fixture of claim 9, wherein a first color is emitted from the first array at a first location relative to the first axis, and the first color is emitted from the second array at a second location relative to the second axis.

11. The light fixture of claim 10, wherein the second location is rotated 45 degrees about the second axis from where the first location is positioned relative to the first axis.

12. The light fixture of claim 11, wherein the first color is emitted from the third array at a third location relative to the third axis, the third location is rotated 45 degrees about the third axis from where the second location is positioned relative to the second axis.

13. The light fixture of claim 11, wherein a second color is emitted from the first array at a third location relative to the first axis, and the second color is emitted from the second array at a fourth location relative to the second axis; wherein the fourth location is rotated 45 degrees about the second axis from where the third location is positioned relative to the first axis.

14. The light fixture of claim 9, wherein a first section includes the first array, the second array, the third array, and the fourth array,
and wherein the light fixture further includes a second section positioned adjacent the first section, the second section includes a fifth array with light emitters arranged in the first pattern about a fifth axis and in the second pattern about the fifth axis, the fifth axis is positioned the distance away from the first axis,
and preferably wherein the first section and the second section are contained within a housing, and wherein the first axis is positioned a second distance away from the housing, the second distance is equal to one half the first distance, and preferably wherein the fifth axis is positioned the second distance away from the housing.

15. The light fixture of claim 9, wherein the light emitters are light emitting diodes.
